# EUROPÄISCHE PATENTSCHRIFT

(11) **EP 2 857 273 B1**
(45) Veröffentlichungstag und Bekanntmachung des Hinweises auf die Patenterteilung: **28.11.2018**
(21) Anmeldenummer: 14178874.5
(22) Anmeldetag: 29.07.2014
(51) Int. Cl.: B60W 30/12, B60W 30/16, B60W 50/00

(54) **Anordnung zur Steuerung eines hochautomatisierten Fahrens eines Fahrzeugs**
Assembly for the control of a highly automated running of a vehicle
Système de commande d'une conduite entièrement automatique d'un véhicule

(30) Priorität: 16.08.2013 DE 102013216263
(43) Veröffentlichungstag der Anmeldung: 08.04.2015
(73) Patentinhaber: Continental Automotive GmbH, 30165 Hannover (DE)
(72) Erfinder: Schnieders, Heiko, 64850 Schaafheim (DE); Leimbach, Jürgen, 63741 Aschaffenburg (DE)

(56) Entgegenhaltungen:
- WO-A1-2005/047046
- WO-A2-2013/034347
- DE-A1- 19 743 024
- DE-A1-102009 050 404
- DE-A1-102010 022 433

## Beschreibung

Die Erfindung betrifft eine Anordnung zur Steuerung eines hochautomatisierten Fahrens eines Fahrzeugs, insbesondere eines autonomen Fahrens eines Fahrzeugs. Die Erfindung betrifft des Weiteren ein Fahrzeug zum hochautomatisierten Fahren.

Beim hochautomatisierten Fahren kann eine Fahrzeugführungseinrichtung ein autonomes Führen des Fahrzeugs übernehmen. Die Fahrzeugführungseinrichtung übernimmt gewissermaßen die Funktionen eines Autopiloten. Der Fahrer selbst ist während einer Zeit, während der das Fahrzeug autonom von der Fahrzeugführungseinrichtung gesteuert wird, nicht am Vorgang der Fahrzeugführung beteiligt. Er muss während der Zeit, während der die Fahrzeugführungseinrichtung zum Führen des Fahrzeugs aktiviert ist, das Fahrzeug nicht selbst steuern.

Während des hochautomatisierten Fahrens können jedoch Situationen auftreten, in denen die Fahrzeugführungseinrichtung die Kontrolle des Fahrzeugs wieder an den Fahrer übergeben muss. Die Ursache für die Übergabe der Fahrzeugführung an den Fahrer kann durch das Fahrzeug selbst bedingt sein, beispielsweise bei einem technischen Ausfall eines Systems, das für die bestimmungsgemäße Funktion der Fahrzeugführungseinrichtung entscheidend ist. Des Weiteren können im Fahrzeugumfeld unerwartete Fahrsituationen, Hindernisse oder Sichtbehinderungen auftreten, die es der Fahrzeugsführungseinrichtung unmöglich machen, die Führung des Fahrzeugs sicher auszuüben. Eine weitere Problemursache kann darin liegen, dass eine die Fahrzeugführungseinrichtung unterstützende Kommunikation zu anderen Fahrzeugen oder mit Service-Centern nur unzureichend funktioniert.

Für die Übergabe der Steuerung des Fahrzeugs an den Fahrer ist eine gewisse Zeit notwendig. Bei dieser Zeit handelt es sich um eine Reaktionszeit Tᵢ, die der Fahrer benötigt um beispielsweise die notwendige Aufmerksamkeit zu erreichen beziehungsweise eine Fahrsituation zu erkennen, damit er das Fahrzeug sicher übernehmen kann.

Die Fahrzeugführungseinrichtung ist technisch aufwändig und muss während der Reaktionszeit Tᵢ des Fahrers ausfallsicher und garantiert unfallfrei funktionieren. Die Fahrzeugführungseinrichtung muss insbesondere vom Erkennen einer Problemsituation zu einem Zeitpunkt t bis zu einem Zeitpunkt t+Tᵢ, zu dem der Fahrer das Fahrzeug sicher übernommen hat, zuverlässig funktionieren. Um schwerwiegende Unfälle zu vermeiden, ist die Reaktionszeit Tᵢ so zu dimensionieren, dass alle Fahrer zu allen gewöhnlichen Umständen das Fahrzeug sicher übernehmen können. Je größer die Reaktionszeit Tᵢ wird, desto größer wird der technische Aufwand und die Systemkosten.

Ohne Kenntnisse über den Zustand des Fahrers und die Fahrsituation kann die Reaktionszeit Tᵢ nur mit einer maximalen Zeit Tₘₐₓ angenommen werden, was einer worst-case Auslegung der Fahrzeugführungseinrichtung entspricht. Eine derartige Auslegung einer Anordnung zum hochautomatisierten Fahren führt jedoch zu dem höchsten technischen Aufwand und hohen Kosten. Die Fahrzeugführungseinrichtung muss bei einer solchen Systemauslegung oftmals selbst dann, wenn sie das Fahrzeug noch für eine verhältnismäßig lange Zeit führen könnte, aufgrund der angenommenen hohen Reaktionszeit des Fahrers die Kontrolle vorzeitig an den Fahrer abgeben. Dies führt dazu, dass der Fahrer auch bei verhältnismäßig unkritischen Situationen, in denen die Fahrzeugführungseinrichtung das Fahrzeug noch für eine längere Zeit weiterhin selbst steuern könnte, in die Kontrolle des Fahrzeugs eingreifen muss beziehungsweise von der Fahrzeugführungseinrichtung zur Übernahme der Kontrolle über das Fahrzeug aufgefordert wird.

Aus WO 2013/034347 A2 ist ein Verfahren zum Entlasten eines Fahrers beim Führen eines Fahrzeugs bekannt, wobei der Fahrer eine Anfrage an eine Steuerung durchführt, ob die Steuerung wenigstens eine Teilfunktion des Führens des Fahrzeugs übernehmen kann. Die Steuerung überprüft nach der Anfrage, ob wenigstens ein festgelegter Parameter erfüllt ist und übernimmt die Führung der Teilfunktion des Fahrzeugs, wenn der festgelegte Parameter erfüllt ist.

Aus DE 10 2010 022 433 A1 ist ein Verfahren zur Steuerung des Betriebs eines vollautomatischen, zur unabhängigen Fahrzeugführung ausgebildeten Fahrerassistenzsystems eines Kraftfahrzeugs bekannt. Abhängig von einer Betätigung eines Bedienelements durch den Fahrer wird ein Aufmerksamkeitspotential auf einen Startwert gesetzt. Das Aufmerksamkeitspotential wird mit einer Sinkgeschwindigkeit reduziert. Mit dem Verfahren soll eine Verfügbarkeit des Fahrers als Rückfallebene sichergestellt werden.

Die Aufgabe der vorliegenden Erfindung ist es, eine Anordnung zur Steuerung eines hochautomatisierten Fahrens eines Fahrzeugs anzugeben, bei der die Fahrzeugführungseinrichtung zum autonomen Führen des Fahrzeugs möglichst häufig und lange aktiviert ist. Eine weitere Aufgabe der vorliegenden Erfindung ist es ein Fahrzeug zum hoch automatisierten Fahren anzugeben, das möglichst häufig und lange autonom geführt werden kann.

Eine Ausführungsform einer Anordnung zur Steuerung eines hochautomatisierten Fahrens eines Fahrzeugs ist im Patentanspruch 1 angegeben. Die Anordnung umfasst eine Fahrzeugführungseinrichtung zum autonomen Führen des Fahrzeugs, eine Auswerteeinrichtung zur Auswertung eines Zustands eines Fahrers des Fahrzeugs und eine Steuerungseinrichtung zur Steuerung eines Aktivierens und Deaktivierens der Fahrzeugführungseinrichtung. Die Fahrzeugführungseinrichtung ist dazu ausgebildet, in einem aktivierten Zustand das Fahrzeug autonom zu führen. Die Fahrzeugführungseinrichtung ist weiterhin dazu ausgebildet, eine verbleibende autonome Fahrzeit zu ermitteln, wobei die verbleibende autonome Fahrzeit eine Zeit angibt, für die die Fahrzeugführungseinrichtung das Fahrzeug autonom führen kann. Die Auswerteeinrichtung ist dazu ausgebildet, in Abhängigkeit von dem ausgewerteten Zustand des Fahrers eine Reaktionszeit des Fahrers zu ermitteln, wobei die Reaktionszeit eine Zeit angibt, die der Fahrer höchstens zum Übernehmen des Steuern des Fahrzeugs von der Fahrzeugführungseinrichtung benötigt, wenn die Fahrzeugführungseinrichtung den aktivierten Zustand aufweist. Die Steuerungseinrichtung ist dazu ausgebildet, in Abhängigkeit von der verbleibenden autonomen Fahrzeit und der Reaktionszeit des Fahrers die Fahrzeugführungseinrichtung zum autonomen Führen des Fahrzeugs zu aktivieren oder zu deaktivieren.

Eine Ausführungsform eines Fahrzeugs zum hochautomatisierten Fahren ist im Patentanspruch 11 angegeben. Das Fahrzeug umfasst eine Anordnung zur Steuerung eines autonomen Fahrens eines Fahrzeugs nach der oben angegebenen Ausführungsform.

Gemäß der Anordnung zur Steuerung eines hochautomatisierten Fahrens eines Fahrzeugs kann die Reaktionszeit Tᵢ eines Fahrers individuell ermittelt werden, indem ein Zustand des Fahrers ausgewertet wird. Die Anordnung kann beispielsweise eine erste Sensoreinrichtung zum Erfassen des Zustands des Fahrers aufweisen. Die erste Sensoreinrichtung kann in Abhängigkeit von dem ermittelten Zustand des Fahrers ein Fahrer-Zustandssignal erzeugen, das der Auswerteeinrichtung den erfassten Zustand des Fahrers angibt. Die Auswerteeinrichtung kann somit aus den von der ersten Sensoreinrichtung ausgegebenen Daten und gegebenenfalls Fahrerpräferenzen die Reaktionszeit als die notwendige Zeit zur Fahrzeugübernahme für einen Fahrer im aktuellen Zustand ermitteln.

Dadurch kann die Auswerteeinrichtung die Reaktionszeit Tᵢ des Fahrers in Abhängigkeit von der Aufmerksamkeit des Fahrers, dem Fahrerwillen/der Fahrerabsicht und dem Reaktionsvermögen des Fahrers ermitteln. Die kürzeste Zeit zur Fahrzeugübernahme ergibt sich für einen aufmerksamen Fahrer, mit gutem Reaktionsvermögen und dem Willen den Autopiloten/die Fahrzeugführungseinrichtung möglichst lange im aktivierten Zustand zu halten und bei Problemen schnell das Fahrzeug zu übernehmen. In diesem Fall entspricht die Reaktionszeit Tᵢ einer minimalen Zeit Tₘᵢₙ.

Die Anordnung kann neben der ersten Sensoreinrichtung weitere Sensoreinrichtungen zum Erfassen eines Zustands des Fahrzeugs, zum Erfassen eines Verkehrszustands, zum Erfassen eines Zustands der Umgebung des Fahrzeugs und/oder zum Erfassen eines Wetterzustands aufweisen. Die Fahrzeugführungseinrichtung ist dazu ausgebildet, in Abhängigkeit von den Daten, die von den weiteren Sensoreinrichtungen zur Verfügung gestellt werden, die verbleibende autonome Fahrzeit T_{HAF}, für die die Fahrzeugführungseinrichtung das Fahrzeug sicher autonom weiterführen kann, zu ermitteln.

Anhand eines Vergleichs zwischen der ermittelten verbleibenden autonomen Fahrzeit T_{HAF} der Fahrzeugführungseinrichtung und der ermittelten Reaktionszeit Tᵢ des Fahrers kann von der Steuerungseinrichtung eine Entscheidung getroffen werden, ob das Fahrzeug autonom weiterfahren kann oder die Kontrolle des Fahrzeugs an den Fahrer übergegeben werden muss. Solange die verbleibende autonome Fahrzeit T_{HAF} größer ist als die Reaktionszeit Tᵢ des Fahrers kann die Fahrzeugführungseinrichtung im aktivierten Zustand verbleiben und das Fahrzeug autonom steuern oder die Fahrzeugführungseinrichtung kann von einem deaktivierten Zustand in den aktivierten Zustand geschaltet werden. Wenn die verbleibende autonome Fahrzeit T_{HAF} gleich der Reaktionszeit Tᵢ des Fahrers ist, muss der Fahrer von der Steuerungseinrichtung, beispielsweise durch Anzeigen eines Warnsignals, auf die baldige Übernahme der Kontrolle des Fahrzeugs aufmerksam gemacht werden.

Im Unterschied zu einem System, bei dem die Reaktionszeit aufgrund einer Worst-Case-Betrachtung stets als maximale Zeit Tₘₐₓ angenommen wird, die ein Fahrer maximal benötigt, um ein Fahrzeug sicher zu übernehmen, wird die Reaktionszeit Tᵢ mit der angegebenen Anordnung individuell für jeden Fahrer ermittelt. Dadurch kann das Fahrzeug weiter autonom gesteuert werden, auch wenn die verbleibende autonome Fahrzeit kleiner als die maximal angenommene Reaktionszeit Tₘₐₓ ist. Dadurch kann die Fahrzeugführungseinrichtung öfter und für längere Zeit aktiviert sein, was einen Mehrwert für das hochautomatisierte Fahrsystem und dadurch für den Fahrer darstellt, da sich weniger Übergaben an den Fahrer ergeben. Durch die vermehrte Nutzung des hochautomatisierten, autonomen Fahrens ergibt sich somit ein sichererer Fahrzeugbetrieb, wodurch die Unfallgefahr verringert werden kann. Eine mit der angegebenen Anordnung ausgestattete hoch automatisierte Fahrzeugflotte kann somit mit höherer Sicherheit betrieben werden.

Weitere Ausführungsformen der vorliegenden Erfindung werden im Folgenden anhand von Figuren näher erläutert. Es zeigen:
- Figur 1: eine Ausführungsform eines Fahrzeugs mit einer Anordnung zur Steuerung eines hochautomatisierten Fahrens des Fahrzeugs,
- Figur 2: eine Ausführungsform einer Anordnung zur Steuerung eines hochautomatisierten Fahrens eines Fahrzeugs,
- Figur 3: Arbeitsbereiche einer Fahrzeugführungseinrichtung zum autonomen Führen eines Fahrzeugs.

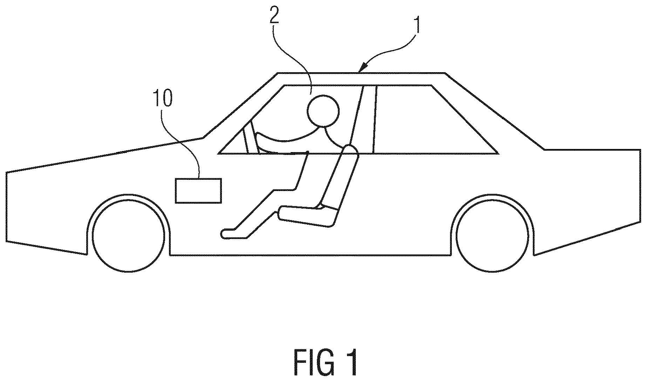

Figur 1 zeigt eine Ausführungsform eines Fahrzeugs 1 mit einer Anordnung 10 zur Steuerung eines hochautomatisierten Fahrens des Fahrzeugs 1. Die Anordnung 10 ist dazu ausgebildet, einen Zustand eines Fahrers 2 zu erfassen und daraus eine Reaktionszeit Tᵢ des Fahrers zu ermitteln. Die Reaktionszeit Tᵢ des Fahrers gibt die Zeit an, die der Fahrer 2 höchstens zum Übernehmen des Steuerns des Fahrzeugs 1 benötigt, wenn das Fahrzeug zuvor autonom gesteuert worden ist. In Abhängigkeit von einem Vergleich zwischen einer verbleibenden autonomen Fahrzeit T_{HAF}, die von der Anordnung 10 ermittelt worden ist und während der das Fahrzeug 1 autonom gesteuert werden kann, und der Reaktionszeit Tᵢ des Fahrers 2 wird von der Anordnung 10 festgelegt, ob das Fahrzeug 1 weiterhin hoch automatisiert beziehungsweise autonom, das heißt ohne Beteiligung des Fahrers, gesteuert wird, oder die Kontrolle an den Fahrer übergeben werden muss.

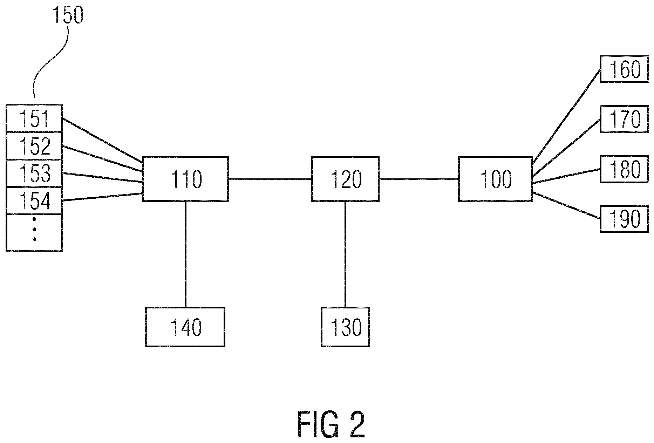

Figur 2 zeigt eine Ausführungsform der Anordnung 10 zur Steuerung eines hochautomatisierten Fahrens. Die Anordnung umfasst eine Fahrzeugführungseinrichtung 100 zum autonomen Führen des Fahrzeugs 1, eine Auswerteeinrichtung 110 zur Auswertung eines Zustands des Fahrers 2 des Fahrzeugs und eine Steuerungseinrichtung 120 zur Steuerung eines Aktivierens und Deaktivierens der Fahrzeugführungseinrichtung 100.

Die Fahrzeugführungseinrichtung 100 ist dazu ausgebildet in einem aktivierten Zustand das Fahrzeug 1 der Figur 1 autonom zu führen. In einem deaktivierten Zustand der Fahrzeugführungseinrichtung muss der Fahrer 2 die Kontrolle über das Fahrzeug übernehmen. Die Fahrzeugführungseinrichtung 100 ist weiterhin dazu ausgebildet, eine verbleibende autonome Fahrzeit T_{HAF} zu ermitteln, wobei die verbleibende autonome Fahrzeit T_{HAF} eine Zeit angibt, für die die Fahrzeugführungseinrichtung 100 das Fahrzeug 1 autonom führen kann.

Die verbleibende autonome Fahrzeit T_{HAF} ist beispielsweise vom technischen Systemzustand des Fahrzeugs 2, vom Verkehrszustand oder von einer Fahrsituation in der Umgebung des Fahrzeugs, beispielsweise einem Straßenzustand oder Hindernissen auf der Fahrbahn, abhängig. Weiterhin kann die verbleibende autonome Fahrzeit T_{HAF} vom vorherrschenden Wetterzustand oder von der Kommunikation der Fahrzeugführungseinrichtung mit anderen Fahrzeugen beziehungsweise einem Server abhängen. Wenn die Kommunikation der Fahrzeugführungseinrichtung mit anderen Fahrzeugen oder einem Server beispielsweise gestört ist, wird die Fahrzeugführungseinrichtung eine geringe verbleibende autonome Fahrzeit ermitteln.

Die Auswerteeinrichtung 110 ist dazu ausgebildet, in Abhängigkeit von dem ermittelten Zustand des Fahrers eine Reaktionszeit Tᵢ des Fahrers 2 zu ermitteln. Die Reaktionszeit Tᵢ des Fahrers gibt dabei eine Zeit an, die der Fahrer höchstens zum Übernehmen des Steuerns des Fahrzeugs von der Fahrzeugführungseinrichtung benötigt, wenn die Fahrzeugführungseinrichtung den aktiven Zustand aufweist beziehungsweise das Fahrzeug autonom von der Fahrzeugführungseinrichtung gesteuert wird. Der Zustand des Fahrers und damit die Reaktionszeit des Fahrers hängen beispielsweise von der vorherrschenden Aufmerksamkeit des Fahrers, dem Fahrerwillen, einer Fahrerabsicht und dem Reaktionsvermögen des Fahrers ab.

Die Steuerungseinrichtung 120 ist dazu ausgebildet, in Abhängigkeit von der verbleibenden autonomen Fahrzeit T_{HAF} der Fahrzeugführungseinrichtung und der Reaktionszeit Tᵢ des Fahrers die Fahrzeugführungseinrichtung 100 zum autonomen Führen des Fahrzeugs 1 zu aktivieren oder zu deaktivieren. Die Steuerungseinrichtung 120 kann beispielsweise dazu ausgebildet sein, die verbleibende autonome Fahrzeit T_{HAF} mit der Reaktionszeit Tᵢ zu vergleichen. Des Weiteren kann die Steuerungseinrichtung 120 dazu ausgebildet sein, die Fahrzeugführungseinrichtung 100 von dem deaktivierten Zustand in den aktivierten Zustand zu schalten, wenn die Steuerungseinrichtung 120 feststellt, dass die verbleibende autonome Fahrzeit T_{HAF} größer ist als die Reaktionszeit Tᵢ des Fahrers. Des Weiteren kann die Steuerungseinrichtung 120 dazu ausgebildet sein, die Fahrzeugführungseinrichtung 100 solange im aktivierten Zustand zu betreiben, solange die verbleibende autonome Fahrzeit T_{HAF} größer ist als die Reaktionszeit Tᵢ ist.

Wenn die Steuerungseinrichtung 120 hingegen feststellt, dass die verbleibende autonome Fahrzeit T_{HAF} kleiner ist als die Reaktionszeit Tᵢ, ist ein autonomes Fahren mittels der Fahrzeugführungseinrichtung 100 nicht möglich. In diesem Fall verbleibt die Fahrzeugführungseinrichtung 100 im deaktivierten Zustand.

Wenn das Fahrzeug von der Fahrzeugführungseinrichtung 100 autonom gesteuert wird und die Steuerungseinrichtung 120 feststellt, dass die verbleibende autonome Fahrzeit T_{HAF} gleich der Reaktionszeit Tᵢ des Fahrers 2 ist, muss die Übernahme der Kontrolle des Fahrzeugs durch den Fahrer vorbereitet werden. Die Anordnung kann dazu beispielsweise eine Anzeigeeinrichtung 130 zum Anzeigen eines Signals enthalten. Auf der Anzeigeeinrichtung 130 lässt sich beispielsweise ein Warnsignal ausgeben, das den Fahrer darauf hinweist, dass die Fahrzeugführungseinrichtung 100 die Kontrolle des Fahrzeugs nicht mehr lange beherrschen kann und die Steuerung des Fahrzeugs an den Fahrer abgeben möchte.

Die Steuerungseinrichtung 120 kann zur Steuerung der Ausgabe des Signals auf der Anzeigeeinrichtung 130 ausgebildet sein. Die Steuerungseinrichtung 120 kann insbesondere dazu ausgebildet sein, das Signal auf der Anzeigeeinrichtung 130 spätestens dann auszugeben, wenn die Steuerungseinrichtung 120 feststellt, dass die verbleibende autonome Fahrzeit T_{HAF} gleich der Reaktionszeit Tᵢ des Fahrers ist.

Gemäß einer weiteren möglichen Ausführungsform kann die Anordnung zur Steuerung eines hochautomatisierten Fahrens eines Fahrzeugs eine Eingabeeinrichtung 140 zur Eingabe einer Zeit aufweisen. Wenn der Fahrer 2 beispielsweise während einer Fahrt feststellt, dass die Fahrzeugführungseinrichtung 100 ihn nach seiner Ansicht zu spät oder zu früh auf die Übernahme der Kontrolle des Fahrzeugs aufmerksam macht, kann der Fahrer mittels der Eingabeeinrichtung 140 durch Eingabe einer Zeitangabe die von der Auswerteeinrichtung 110 ermittelte Reaktionszeit Tᵢ modifizieren.

Die Auswerteeinrichtung 110 ist dann entsprechend dazu ausgebildet, die Reaktionszeit Tᵢ in Abhängigkeit von der von dem Fahrer eingegebenen Zeit zu ermitteln. Dadurch kann beispielsweise eine modifizierte, im Vergleich zu der ursprünglich von der Auswerteeinrichtung ermittelten Reaktionszeit Tᵢ längere oder kürzere Reaktionszeit festgelegt werden. Bei einer anderen Ausführungsform kann der Fahrer durch die Eingabe einer Zeit in die Eingabeeinrichtung 140 der Anordnung eine absolute Reaktionszeit Tᵢ vorgeben. Die Steuereinrichtung übernimmt dann für den Vergleich mit der verbleibenden autonomen Fahrzeit T_{HAF} diese vom Fahrer eingegebene Zeit als Reaktionszeit Tᵢ.

Wie oben erläutert, ist es mit der Anordnung 10 möglich die Reaktionszeit Tᵢ des Fahrers zu ermitteln. Zu diesem Zweck weist die Anordnung 10 eine erste Sensoreinrichtung 150 zum Erfassen des Zustands des Fahrers 2 auf. Die Auswerteeinrichtung 110 ist mit der ersten Sensoreinrichtung 150 gekoppelt. Die erste Sensoreinrichtung 150 ist dazu ausgebildet, in Abhängigkeit von dem ermittelten Zustand des Fahrers 2 ein Fahrer-Zustandssignal zu erzeugen. Das Fahrer-Zustandssignal gibt den erfassten Zustand des Fahrers 2 an. Die Auswerteeinrichtung 110 ist dazu ausgebildet, in Abhängigkeit von diesem Fahrer-Zustandssignal die Reaktionszeit Tᵢ zu ermitteln.

Die erste Sensoreinrichtung 150 kann beispielsweise mindestens eine Kamera 151 zur Beobachtung des Fahrers 2 und /oder mindestens einen Sensor 152 zum Erfassen einer Sitzposition des Fahrers oder zum Erfassen einer Bewegung des Fahrers und eventuell zur Pulsauswertung aufweisen. Des Weiteren kann die erste Sensoreinrichtung 150 mindestens einen Sensor 153 zum Erfassen eines physischen Zustands des Fahrers aufweisen. Dazu gehören beispielsweise Sensoren, mit denen der Puls oder eventuell auch ein Hautwiderstand des Fahrers sowie der Konsum von Alkohol oder Drogen durch den Fahrer erfasst werden kann. Des Weiteren kann die erste Sensoreinrichtung 150 ein Mikrofon 154 zur Sprachauswertung, zur Stimmauswertung oder zur Auswertung von Geräuschen, insbesondere der Innenraumlautstärke, aufweisen. Des Weiteren können Sensoren beziehungsweise Bedienelemente im Fahrzeuginneren vorgesehen sein, die die aktuelle Aktivität des Fahrers erkennen oder eine Annäherung zu bestimmten Bedienelementen ermitteln können.

Die Anordnung kann weitere Sensoren zum Ermitteln von Daten, mit denen die Fahrzeugführungseinrichtung 100 die verbleibende autonome Fahrzeit T_{HAF} ermitteln kann, aufweisen. Gemäß einer möglichen Ausführungsform weist die Anordnung 10 eine zweite Sensoreinrichtung 160 zum Erfassen eines Zustands des Fahrzeugs 2 auf. Die Fahrzeugführungseinrichtung 100 ist mit der zweiten Sensoreinrichtung 160 gekoppelt. Die zweite Sensoreinrichtung 160 erzeugt in Abhängigkeit von dem ermittelten Zustand des Fahrzeugs 2 ein Fahrzeug-Zustandssignal. Das Fahrzeug-Zustandssignal gibt den erfassten Zustand des Fahrzeugs 2 an. Die Fahrzeugführungseinrichtung 100 ist insbesondere dazu ausgebildet, in Abhängigkeit von dem Fahrzeug-Zustandssignal die verbleibende autonome Fahrzeit T_{HAF} zu ermitteln.

Gemäß einer möglichen weiteren Ausführungsform kann die Anordnung 10 eine dritte Sensoreinrichtung 170 zum Erfassen eines Verkehrszustands aufweisen. Die Fahrzeugführungseinrichtung 100 ist mit der dritten Sensoreinrichtung 170 gekoppelt. Die dritte Sensoreinrichtung 170 kann in Abhängigkeit von dem ermittelten Verkehrszustand ein Verkehrs-Zustandssignal erzeugen, das den vorherrschenden Verkehrszustand angibt. Die Fahrzeugführungseinrichtung 100 ist insbesondere dazu ausgebildet, in Abhängigkeit von dem Verkehrs-Zustandssignal die verbleibende autonome Fahrzeit T_{HAF} zu ermitteln. Die dritte Sensoreinrichtung kann beispielsweise eine Empfangseinrichtung sein, die von einem Server den aktuellen Verkehrszustand abfragen kann.

Gemäß einer weiteren Ausführungsform weist die Anordnung 10 eine vierte Sensoreinrichtung 180 zum Erfassen eines Zustands der Umgebung des Fahrzeugs 2 auf. Die vierte Sensoreinrichtung umfasst beispielsweise Kameras und/oder ein Abstandsradar. Die Fahrzeugführungseinrichtung 100 ist mit der vierten Sensoreinrichtung 180 gekoppelt. Die vierte Sensoreinrichtung 180 erzeugt in Abhängigkeit von dem ermittelten Zustand der Umgebung des Fahrzeugs 2 ein Umgebungs-Zustandssignal, das den Zustand der Umgebung des Fahrzeugs 2 angibt. Die Fahrzeugführungseinrichtung 100 ist bei dieser Ausführungsform dazu ausgebildet, in Abhängigkeit von dem Umgebungs-Zustandssignal die verbleibende autonome Fahrzeit zu ermitteln.

Gemäß einer weiteren Ausführungsform umfasst die Anordnung 10 eine fünfte Sensoreinrichtung 190 zum Erfassen eines Wetterzustands. Die fünfte Sensoreinrichtung kann beispielweise ein Empfänger sein, der von einem Service-Provider Wetterdaten empfängt. Die Fahrzeugführungseinrichtung 100 ist mit der fünften Sensoreinrichtung 190 gekoppelt. Die fünfte Sensoreinrichtung 190 erzeugt in Abhängigkeit von dem ermittelten Zustand des Wetters ein Wetter-Zustandssignal. Das Wetter-Zustandssignal gibt den Zustand des Wetters an. Die Fahrzeugführungseinrichtung 100 ist dazu ausgebildet, in Abhängigkeit von dem Wetter-Zustandssignal die verbleibende autonome Fahrzeit zu ermitteln.

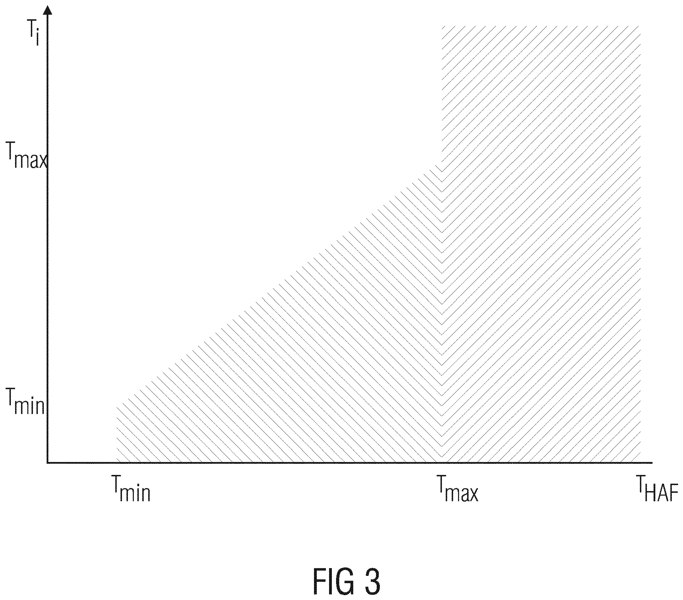

Figur 3 zeigt in einem Diagramm die verschiedenen Arbeitsbereiche der Fahrzeugführungseinrichtung 100 zum autonomen Führen des Fahrzeugs 1 in Abhängigkeit von der verbleibenden autonomen Fahrzeit T_{HAF} und der Reaktionszeit Tᵢ des Fahrers. Für die verbleibende autonome Fahrzeit und die Reaktionszeit wird eine maximale Zeit Tₘₐₓ und eine minimale Zeit Tₘᵢₙ definiert. Der Arbeitsbereich, in dem die Fahrzeugführungseinrichtung 100 von der Steuereinrichtung 120 zum autonomen Führen des Fahrzeugs 1 im aktivierten Zustand betrieben wird, ist schraffiert dargestellt.

Aus dem Diagramm wird ersichtlich, dass für den Fall, wenn T_{HAF} größer Tₘₐₓ ist, die Fahrzeugführungseinrichtung 100 immer im aktivierten Zustand zum autonomen Führen des Fahrzeugs betrieben werden kann. Wenn hingegen die verbleibende autonome Fahrzeit T_{HAF} kleiner als Tₘᵢₙ ist, wird die Fahrzeugführungseinrichtung 100 im deaktivierten Zustand betrieben. In diesem Fall ist ein autonomes Fahren nicht möglich. Für den Fall, dass Tₘᵢₙ kleiner als die verbleibende autonome Fahrzeit T_{HAF} ist und die verbleibende autonome Fahrzeit T_{HAF} kleiner Tₘₐₓ ist, kann die Fahrzeugführungseinrichtung 100 nur dann im aktivierten Zustand betrieben werden, das heißt das Fahrzeug autonom steuern, falls die verbleibende autonome Fahrzeit T_{HAF} größer als die Reaktionszeit Tᵢ ist.

Anhand der Arbeitsbereiche der Fahrzeugführungseinrichtung 100 wird ersichtlich, dass die Fahrzeugführungseinrichtung auch in denjenigen Situationen aktiv bleiben kann, für die die verbleibende autonome Fahrzeit T_{HAF} kleiner als eine maximal angenommene Zeit Tₘₐₓ ist, falls die Reaktionszeit Tᵢ kleiner als die autonome verbleibende Fahrzeit T_{HAF} ist. Somit kann das Fahrzeug öfter und länger autonom gesteuert werden und es ergeben sich weniger Übergaben an den Fahrer.

Die Fahrzeugführungseinrichtung muss nicht immer zwischen dem aktivierten und deaktivierten Zustand hin und her geschaltet werden, wenn der Wert der verbleibende autonome Fahrzeit T_{HAF} unter den Wert der Reaktionszeit Tᵢ des Fahrers fällt beziehungsweise wenn der Wert der verbleibende autonome Fahrzeit T_{HAF} den Wert der Reaktionszeit Tᵢ übersteigt. Bei der Entscheidung, ob die Fahrzeugführungseinrichtung zu aktivieren oder deaktivieren ist, kann stattdessen von der Steuereinrichtung eine zeitlich variable, situationsabhängige Unschärfe berücksichtigt werden. Bei einer weiteren vorteilhaften Ausgestaltung der Anordnung 10 kann eine Hysteresezeit für die Umschaltung zwischen dem deaktivierten und dem aktivierten Betrieb der Fahrzeugführungseinrichtung eingeplant werden.

## Patentansprüche

1. Anordnung zur Steuerung eines hochautomatisierten Fahrens eines Fahrzeugs, umfassend:
- eine Fahrzeugführungseinrichtung (100) zum autonomen Führen des Fahrzeugs (1),
- eine Auswerteinrichtung (110) zur Auswertung eines Zustands eines Fahrers (2) des Fahrzeugs (1),
- eine Steuerungseinrichtung (120) zur Steuerung eines Aktivierens und Deaktivierens der Fahrzeugführungseinrichtung (100),
- wobei die Fahrzeugführungseinrichtung (100) dazu ausgebildet ist, in einem aktivierten Zustand das Fahrzeug (1) autonom zu führen,
- wobei die Fahrzeugführungseinrichtung (100) dazu ausgebildet ist, eine verbleibende autonome Fahrzeit (T_{HAF}) zu ermitteln, wobei die verbleibende autonome Fahrzeit (T_{HAF}) eine Zeit angibt, für die die Fahrzeugführungseinrichtung (100) das Fahrzeug (1) autonom führen kann,
- wobei die Auswerteeinrichtung (110) dazu ausgebildet ist, in Abhängigkeit von dem ausgewerteten Zustand des Fahrers (2) eine Reaktionszeit (Tᵢ) des Fahrers (2) zu ermitteln, wobei die Reaktionszeit (Tᵢ) eine Zeit angibt, die der Fahrer (2) höchstens zum Übernehmen des Steuerns des Fahrzeug (1) von der Fahrzeugführungseinrichtung (100) benötigt, wenn die Fahrzeugführungseinrichtung (100) den aktivierten Zustand aufweist,
- wobei die Steuerungseinrichtung (120) dazu ausgebildet ist, in Abhängigkeit von der verbleibenden autonomen Fahrzeit (T_{HAF}) und der Reaktionszeit (Tᵢ) des Fahrers (2) die Fahrzeugführungseinrichtung (100) zum autonomen Führen des Fahrzeugs (1) zu aktivieren oder zu deaktivieren.

2. Anordnung nach Anspruch 1, wobei
- die Steuerungseinrichtung (120) dazu ausgebildet ist, die verbleibende autonome Fahrzeit (T_{HAF}) mit der Reaktionszeit (Tᵢ) zu vergleichen,
- wobei die Steuerungseinrichtung (120) dazu ausgebildet ist, die Fahrzeugführungseinrichtung (100) von dem deaktivierten Zustand in den aktivierten Zustand zu schalten oder den aktivierten Zustand der Fahrzeugführungseinrichtung (100) beizubehalten, wenn die Steuerungseinrichtung (120) feststellt, dass die verbleibende autonome Fahrzeit (T_{HAF}) größer ist als die Reaktionszeit (Tᵢ).

3. Anordnung nach einem der Ansprüche 1 oder 2, umfassend:
- eine Anzeigeeinrichtung (130) zum Anzeigen eines Signals,
- wobei die Steuerungseinrichtung (120) zur Steuerung der Ausgabe des Signals auf der Anzeigeeinrichtung (130) ausgebildet ist,
- wobei die Steuerungseinrichtung (120) dazu ausgebildet ist, das Signal auf der Anzeigeeinrichtung (130) spätestens auszugeben, wenn die Steuerungseinrichtung (120) feststellt, dass die verbleibende autonome Fahrzeit (T_{HAF}) gleich der Reaktionszeit (Tᵢ) ist.

4. Anordnung nach einem der Ansprüche 1 bis 3, umfassend:
- eine Eingabeeinrichtung (140) zur Eingabe einer Zeit,
- wobei die Auswerteinrichtung (110) dazu ausgebildet ist, die Reaktionszeit (Tᵢ) in Abhängigkeit von der eingegebenen Zeit zu ermitteln.

5. Anordnung nach einem der Ansprüche 1 bis 4, umfassend:
- eine erste Sensoreinrichtung (150) zum Erfassen des Zustands des Fahrers (2),
- wobei die Auswerteeinrichtung (110) mit der ersten Sensoreinrichtung (150) gekoppelt ist,
- wobei die erste Sensoreinrichtung (150) in Abhängigkeit von dem ermittelten Zustand des Fahrers (2) ein Fahrer-Zustandssignal erzeugt, wobei das Fahrer-Zustandssignal den erfassten Zustand des Fahrers (2) angibt,
- wobei die Auswerteeinrichtung (110) dazu ausgebildet ist, in Abhängigkeit von dem Fahrer-Zustandssignal die Reaktionszeit (Tᵢ) zu ermitteln.

6. Anordnung nach Anspruch 5, wobei die erste Sensoreinrichtung (150) mindestens eine Kamera (151) zur Beobachtung des Fahrers und/oder mindestens einen Sensor (152) zum Erfassen einer Sitzposition und/oder mindestens einen Sensor (153) zum Erfassen eines physischen Zustands des Fahrers und/oder ein Mikrofon (154) umfasst.

7. Anordnung nach einem der Ansprüche 1 bis 6, umfassend:
- eine zweite Sensoreinrichtung (160) zum Erfassen eines Zustands des Fahrzeugs (2),
- wobei die Fahrzeugführungseinrichtung (100) mit der zweiten Sensoreinrichtung (160) gekoppelt ist,
- wobei die zweite Sensoreinrichtung (160) in Abhängigkeit von dem ermittelten Zustand des Fahrzeugs (2) ein Fahrzeug-Zustandssignal erzeugen, wobei das Fahrzeug-Zustandssignal den erfassten Zustand des Fahrzeugs (2) angibt,
- wobei die Fahrzeugführungseinrichtung (100) dazu ausgebildet ist, in Abhängigkeit von dem Fahrzeug-Zustandssignal die verbleibende autonome Fahrzeit (T_{HAF}) zu ermitteln.

8. Anordnung nach einem der Ansprüche 1 bis 7, umfassend:
- eine dritte Sensoreinrichtung (170) zum Erfassen eines Verkehrszustands,
- wobei die Fahrzeugführungseinrichtung (100) mit der dritten Sensoreinrichtung (170) gekoppelt ist,
- wobei die dritte Sensoreinrichtung (170) in Abhängigkeit von dem ermittelten Verkehrszustand ein Verkehrs-Zustandssignal erzeugt, wobei das Verkehrs-Zustandssignal den Verkehrszustand angibt,
- wobei die Fahrzeugführungseinrichtung (100) dazu ausgebildet ist, in Abhängigkeit von dem Verkehrs-Zustandssignal die verbleibende autonome Fahrzeit (T_{HAF}) zu ermitteln.

9. Anordnung nach einem der Ansprüche 1 bis 8, umfassend:
- eine vierte Sensoreinrichtung (180) zum Erfassen eines Zustands der Umgebung des Fahrzeugs (2),
- wobei die Fahrzeugführungseinrichtung (100) mit der vierten Sensoreinrichtung (180) gekoppelt ist,
- wobei die vierte Sensoreinrichtung (180) in Abhängigkeit von dem ermittelten Zustand der Umgebung des Fahrzeugs (2) ein Umgebungs-Zustandssignal erzeugt, wobei das Umgebungs-Zustandssignal den Zustand der Umgebung des Fahrzeugs (2) angibt,
- wobei die Fahrzeugführungseinrichtung (100) dazu ausgebildet ist, in Abhängigkeit von dem Umgebungs-Zustandssignal die verbleibende autonome Fahrzeit (T_{HAF}) zu ermitteln.

10. Anordnung nach einem der Ansprüche 1 bis 9, umfassend:
- eine fünfte Sensoreinrichtung (190) zum Erfassen eines Wetterzustands,
- wobei die Fahrzeugführungseinrichtung (100) mit der fünften Sensoreinrichtung (190) gekoppelt ist,
- wobei die fünfte Sensoreinrichtung (190) in Abhängigkeit von dem ermittelten Zustand des Wetters ein Wetter-Zustandssignal erzeugt, wobei das Wetter-Zustandssignal den Zustand des Wetters angibt,
- wobei die Fahrzeugführungseinrichtung (100) dazu ausgebildet ist, in Abhängigkeit von dem Wetter-Zustandssignal die verbleibende autonome Fahrzeit (T_{HAF}) zu ermitteln.

11. Fahrzeug zum autonomen Fahren, umfassend:
eine Anordnung (10) zur Steuerung eines autonomen Fahrens eines Fahrzeugs (1) nach einem der Ansprüche 1 bis 10.

## Claims

1. Arrangement for controlling highly automated driving of a vehicle, comprising:
- a vehicle guiding device (100) for autonomously guiding the vehicle (1),
- an evaluation device (110) for evaluating a condition of a driver (2) of the vehicle (1),
- a control device (120) for controlling activation and deactivation of the vehicle guiding device (100),
- wherein the vehicle guiding device (100) is designed to guide the vehicle (1) autonomously in an activated state,
- wherein the vehicle guiding device (100) is designed to calculate a remaining autonomous driving time (T_{HAF}), wherein the remaining autonomous driving time (T_{HAF}) indicates a time for which the vehicle guiding device (100) can autonomously guide the vehicle (1),
- wherein the evaluation device (110) is designed to calculate a reaction time (Tᵢ) of the driver (2) on the basis of the evaluated condition of the driver (2), wherein the reaction time (Tᵢ) indicates a time which the driver (2) requires at most to take over control of the vehicle (1) from the vehicle guiding device (100) when the vehicle guiding device (100) is in the activated state,
- wherein the control device (120) is designed to activate or to deactivate, on the basis of the remaining autonomous driving time (T_{HAF}) and the reaction time (Tᵢ) of the driver (2), the vehicle guiding device (100) for autonomous guiding of the vehicle (1).

2. Arrangement according to Claim 1, wherein
- the control device (120) is designed to compare the remaining autonomous driving time (T_{HAF}) with the reaction time (Tᵢ),
- wherein the control device (120) is designed to switch the vehicle guiding device (100) from the deactivated state into the activated state or to maintain the activated state of the vehicle guiding device (100) if the control device (120) determines that the remaining autonomous driving time (T_{HAF}) is greater than the reaction time (Tᵢ).

3. Arrangement according to either of Claims 1 or 2, comprising:
- an indicating device (130) for indicating a signal,
- wherein the control device (120) is designed to control the output of the signal on the indicating device (130),
- wherein the control device (120) is designed to output the signal on the indicating device (130) at the latest when the control device (120) determines that the remaining autonomous driving time (T_{HAF}) is equal to the reaction time (Tᵢ).

4. Arrangement according to any of Claims 1 to 3, comprising:
- an input device (140) for inputting a time,
- wherein the evaluation device (110) is designed to calculate the reaction time (Tᵢ) on the basis of the input time.

5. Arrangement according to any of Claims 1 to 4, comprising:
- a first sensor device (150) for detecting the condition of the driver (2),
- wherein the evaluation device (110) is coupled to the first sensor device (150),
- wherein the first sensor device (150) generates a driver condition signal on the basis of the calculated condition of the driver (2), wherein the driver condition signal indicates the detected condition of the driver (2),
- wherein the evaluation device (110) is designed to calculate the reaction time (Tᵢ) on the basis of the driver condition signal.

6. Arrangement according to Claim 5, wherein the first sensor device (150) comprises at least one camera (151) for observing the driver and/or at least one sensor (152) for detecting a seat position and/or at least one sensor (153) for detecting a physical condition of the driver and/or a microphone (154).

7. Arrangement according to any of Claims 1 to 6, comprising:
- a second sensor device (160) for detecting a condition of the vehicle (2),
- wherein the vehicle guiding device (100) is coupled to the second sensor device (160),
- wherein the second sensor device (160) generates a vehicle condition signal on the basis of the calculated condition of the vehicle (2), wherein the vehicle condition signal indicates the detected condition of the vehicle (2),
- wherein the vehicle guiding device (100) is designed to calculate the remaining autonomous driving time (T_{HAF}) on the basis of the vehicle condition signal.

8. Arrangement according to any of Claims 1 to 7, comprising:
- a third sensor device (170) for detecting a condition of the traffic,
- wherein the vehicle guiding device (100) is coupled to the third sensor device (170),
- wherein the third sensor device (170) generates a traffic condition signal on the basis of the calculated condition of the traffic, wherein the traffic condition signal indicates the condition of the traffic,
- wherein the vehicle guiding device (100) is designed to calculate the remaining autonomous driving time (T_{HAF}) on the basis of the traffic condition signal.

9. Arrangement according to any of Claims 1 to 8, comprising:
- a fourth sensor device (180) for detecting a condition of the environment of the vehicle (2),
- wherein the vehicle guiding device (100) is coupled to the fourth sensor device (180),
- wherein the fourth sensor device (180) generates an environment condition signal on the basis of the calculated condition of the environment of the vehicle (2), wherein the environment condition signal indicates the condition of the environment of the vehicle (2),
- wherein the vehicle guiding device (100) is designed to calculate the remaining autonomous driving time (T_{HAF}) on the basis of the environment condition signal.

10. Arrangement according to any of Claims 1 to 9, comprising:
- a fifth sensor device (190) for detecting a condition of the weather,
- wherein the vehicle guiding device (100) is coupled to the fifth sensor device (190),
- wherein the fifth sensor device (190) generates a weather condition signal on the basis of the calculated condition of the weather, wherein the weather condition signal indicates the condition of the weather,
- wherein the vehicle guiding device (100) is designed to calculate the remaining autonomous driving time (T_{HAF}) on the basis of the weather condition signal.

11. Vehicle for autonomous driving, comprising:
an arrangement (10) according to any of Claims 1 to 10 for controlling autonomous driving of a vehicle (1).

## Revendications

1. Arrangement de commande d'un déplacement hautement automatisé d'un véhicule, comprenant :
- un dispositif de conduite de véhicule (100) destiné à la conduite autonome du véhicule (1),
- un dispositif d'interprétation (110) destiné à interpréter un état d'un conducteur (2) du véhicule (1),
- un dispositif de commande (120) destiné à commander une activation et une désactivation du dispositif de conduite de véhicule (100),
- le dispositif de conduite de véhicule (100) étant configuré pour, dans un état activé, conduire le véhicule (1) de manière autonome,
- le dispositif de conduite de véhicule (100) étant configuré pour déterminer un temps de conduite autonome restant (T_{HAF}), le temps de conduite autonome restant (T_{HAF}) indiquant un temps pendant lequel le dispositif de conduite de véhicule (100) peut conduire le véhicule (1) de manière autonome,
- le dispositif d'interprétation (110) étant configuré pour déterminer un temps de réaction (Tᵢ) du conducteur (2) en fonction de l'état interprété du conducteur (2), le temps de réaction (Tᵢ) indiquant un temps maximal que nécessite le conducteur (2) pour reprendre du dispositif de conduite de véhicule (100) la commande du véhicule (1) lorsque le dispositif de conduite de véhicule (100) présente l'état activé,
- le dispositif de commande (120) étant configuré pour activer ou pour désactiver le dispositif de conduite de véhicule (100) destiné à la conduite autonome du véhicule (1) en fonction du temps de conduite autonome restant (T_{HAF}) et du temps de réaction (Tᵢ) du conducteur (2) .

2. Arrangement selon la revendication 1,
- le dispositif de commande (120) étant configuré pour comparer le temps de conduite autonome restant (T_{HAF}) au temps de réaction (Tᵢ),
- le dispositif de commande (120) étant configuré pour commuter le dispositif de conduite de véhicule (100) de l'état désactivé à l'état activé ou pour conserver l'état activé du dispositif de conduite de véhicule (100) lorsque le dispositif de commande (120) constate que le temps de conduite autonome restant (T_{HAF}) est supérieur au temps de réaction (Tᵢ) .

3. Arrangement selon l'une des revendications 1 ou 2, comprenant :
- un dispositif d'affichage (130) destiné à afficher un signal,
- le dispositif de commande (120) étant configuré pour commander la délivrance du signal sur le dispositif d'affichage (130),
- le dispositif de commande (120) étant configuré pour délivrer le signal sur le dispositif d'affichage (130) au plus tard lorsque le dispositif de commande (120) constate que le temps de conduite autonome restant (T_{HAF}) est égal au temps de réaction (Tᵢ).

4. Arrangement selon l'une des revendications 1 à 3, comprenant :
- un dispositif de saisie (140) destiné à saisir un temps,
- le dispositif d'interprétation (110) étant configuré pour déterminer le temps de réaction (Tᵢ) en fonction du temps saisi.

5. Arrangement selon l'une des revendications 1 à 4, comprenant :
- un premier dispositif de détection (150) destiné à détecter l'état du conducteur (2),
- le dispositif d'interprétation (110) étant connecté au premier dispositif de détection (150),
- le premier dispositif de détection (150) générant un signal d'état de conducteur en fonction de l'état déterminé du conducteur (2), le signal d'état de conducteur indiquant l'état détecté du conducteur (2),
- le dispositif d'interprétation (110) étant configuré pour déterminer le temps de réaction (Tᵢ) en fonction du signal d'état de conducteur.

6. Arrangement selon la revendication 5, le premier dispositif de détection (150) comportant au moins une caméra (151) destinée à observer le conducteur et/ou au moins un capteur (152) destiné à détecter une position assise et/ou au moins un capteur (153) destiné à détecter un état physique du conducteur et/ou un microphone (154).

7. Arrangement selon l'une des revendications 1 à 6, comprenant :
- un deuxième dispositif de détection (160) destiné à détecter un état du véhicule (2),
- le dispositif de conduite de véhicule (100) étant connecté au deuxième dispositif de détection (160),
- le deuxième dispositif de détection (160) générant un signal d'état de véhicule en fonction de l'état déterminé du véhicule (2), le signal d'état de véhicule indiquant l'état détecté du véhicule (2),
- le dispositif de conduite de véhicule (100) étant configuré pour déterminer le temps de conduite autonome restant (T_{HAF}) en fonction du signal d'état de véhicule.

8. Arrangement selon l'une des revendications 1 à 7, comprenant :
- un troisième dispositif de détection (170) destiné à détecter un état du trafic,
- le dispositif de conduite de véhicule (100) étant connecté au troisième dispositif de détection (170),
- le troisième dispositif de détection (170) générant un signal d'état de trafic en fonction de l'état de trafic déterminé, le signal d'état de trafic indiquant l'état du trafic,
- le dispositif de conduite de véhicule (100) étant configuré pour déterminer le temps de conduite autonome restant (T_{HAF}) en fonction du signal d'état de trafic.

9. Arrangement selon l'une des revendications 1 à 8, comprenant :
- un quatrième dispositif de détection (180) destiné à détecter un état de l'environnement du véhicule (2),
- le dispositif de conduite de véhicule (100) étant connecté au quatrième dispositif de détection (180),
- le quatrième dispositif de détection (180) générant un signal d'état de l'environnement en fonction de l'état déterminé de l'environnement du véhicule (2), le signal d'état de l'environnement indiquant l'état de l'environnement du véhicule (2),
- le dispositif de conduite de véhicule (100) étant configuré pour déterminer le temps de conduite autonome restant (T_{HAF}) en fonction du signal d'état de l'environnement.

10. Arrangement selon l'une des revendications 1 à 9, comprenant :
- un cinquième dispositif de détection (190) destiné à détecter un état météorologique,
- le dispositif de conduite de véhicule (100) étant connecté au cinquième dispositif de détection (190),
- le cinquième dispositif de détection (190) générant un signal d'état météorologique en fonction de l'état météorologique déterminé, le signal d'état météorologique indiquant l'état météorologique,
- le dispositif de conduite de véhicule (100) étant configuré pour déterminer le temps de conduite autonome restant (T_{HAF}) en fonction du signal d'état météorologique.

11. Véhicule destiné à une conduite autonome, comprenant :
un arrangement (10) destiné à commander une conduite autonome d'un véhicule (1) selon l'une des revendications 1 à 10.
